# EUROPÄISCHE PATENTANMELDUNG

(11) **EP 1 357 305 A1**
(43) Veröffentlichungstag der Anmeldung: **29.10.2003**
(21) Anmeldenummer: 02009469.4
(22) Anmeldetag: 25.04.2002
(51) Int. Cl.: F16C 1/26

(54) **Rohranordnung für die Führungsaufnahme eines Zugseils**

(71) Anmelder: Armacell Enterprise GmbH, 48153 Münster (DE)
(72) Erfinder: Karl, Reinhard, 88171 Weiler (DE); Weibel, Jürg P., 6332 Hagendorn (CH); Singer, Anton, 88299 Leutkirch (DE)
(74) Vertreter: Finck, Dieter, Dr.Ing.

(57) **Zusammenfassung**

Die Rohranordnung für die Führungsaufnahme eines Zugseils hat ein Führungsrohr (1), beispielsweise aus einem gewendelten Federstahl, das in zwei Endabschnitte (3, 4) ausläuft, denen jeweils ein Anschlag zugeordnet ist, und einen auf das Führungsrohr (1) aufgeschobenen flexiblen Schlauch aus einem geschäumten Kunststoff, der an den Endabschnitten (3, 4) des Führungsrohrs (1) zu einer dünnen Schicht zusammengedrückt ist und die Endabschnitte (3, 4) abdichtend umschließt. Wenn eine solche Rohranordnung mit einer sich relativ zu ihr bewegenden Glasfläche in Kontakt steht, beispielsweise bei einem Kraftfahrzeugfenster, werden Quietschgeräusche aufgrund des Stick-Slip-Effekts sowie Klappergeräusche durch Schlagen unterbunden.

## Beschreibung

Die Erfindung betrifft eine Rohranordnung für die Führungsaufnahme eines Zugseils mit einem Führungsrohr, insbesondere aus gewendeltem Federstahl oder Kunststoff, das in zwei Endabschnitte ausläuft, denen jeweils ein Anschlag zugeordnet ist, und mit einer dem Führungsrohr außenseitig zugeordneten Ummantelung aus Kunststoff.

Seilzugsysteme, wie Bowdenzüge, werden beispielsweise in der Automobilindustrie zur Kraftübertragung längs der Rohranordnung eingesetzt. Zur Führung eines Zugseils werden dabei Führungsrohre aus gewendeltem Federstahl verwendet, die außenseitig zum Schutz gegen Eindringen von Wasser mit einer Kunststoffschicht versehen sind. Wenn solche Bowdenzüge z.B. im Bereich der Fensterantriebe in Kraftfahrzeugtüren eingesetzt werden, zwingen die Platzverhältnisse zu einer platzsparenden Ausgestaltung der von einem Antriebsmotor oder von Hand angetriebenen Systeme. Aufgrund fahrtbedingter Erschütterungen können die Seilzüge schwingen, was zu störenden Klappergeräuschen führt.

Man verwendet deshalb neuerdings Bowdenzugsysteme, bei denen außen auf die Kunststoffschicht des Führungsrohrs zur Dämpfung eine Ummantelung aus Kunststoff in Form eines Voll- oder Schaummaterials aufgebracht ist, das einen sternförmig ausgebildeten Querschnitt haben kann. Eine solche Ummantelung ist auf das Führungsrohr lagefest so aufgeschoben oder aufextrudiert, dass die Endabschnitte für das Zusammenwirken mit den Anschlägen in Form von fahrzeugseitigen Aussparungen oder Kappen keine Ummantelung, jedoch die Kunststoffschicht aufweisen.

Wenn derart ummantelte Führungsrohre zusammen mit Fensterantrieben eingesetzt werden, ergeben sich aufgrund der Relativbewegung zwischen Fensterscheibe und Kunststoffummantelung Quietschgeräusche, die auf den sogenannten Stick-Slip-Effekt zurückgeführt werden. Derartige Quietschgeräusche lassen sich auch durch die sternförmige oder anders ausgebildete Querschnittsform der Ummantelung nicht vollständig unterdrücken.

Der Erfindung liegt die Aufgabe zugrunde, eine Rohranordnung der eingangs beschriebenen Art zu schaffen, mit der sich bei reduziertem Gewicht bei Ausschluss von Klappergeräuschen und unter Gewährleistung des Schutzes gegen Nässe eine ausreichende Dämpfung von quietschenden Geräuschen aufgrund des Stick-Slip-Phänomens beim Öffnen und Schließen der Fenster in einem Kraftfahrzeug erreichen lässt.

Erfindungsgemäß wird diese Aufgabe dadurch gelöst, dass die Ummantelung des Führungsrohrs als ein flexibler Schlauch aus einem geschäumten Kunststoff ausgeführt ist, der auf das Führungsrohr aufgeschoben ist, und dass der geschäumte Kunststoff wenigstens an den Endabschnitten des Führungsrohrs als dünne Schicht ausgebildet und an den Endabschnitten abdichtend fixiert ist, wobei die Außenform der dünnen Schicht der Montageform entspricht und kleiner ist als der Außenumfang der Ummantelung.

Die erfindungsgemäße Rohranordnung sorgt für eine Minimierung des quietschenden Geräuschs während ihrer Reibung auf dem Fensterglas sowie für eine platzsparende, problemlos austauschbare, kostengünstige Ausführung der gesamten Rohranordnung, die sortenrein entsorgbar ist und den geforderten Einsatzbedingungen bei Temperaturen von -40°C bis +110°C genügt.

Wenn der Innendurchmesser des flexiblen Schlauchs um maximal 50 % größer ist als der Außendurchmesser des Führungsrohrs, lässt sich der Schlauch radial verformen, was ein Auftreten des Stick-Slip-Effekts weiter einschränkt, vor allem dann, wenn die Außenseite des flexiblen Schlauchs aufgerauht ist und/oder eine Profilierung hat, die vorzugsweise von beabstandeten Umfangsrillen gebildet wird, und/oder wenn auf die Außenseite des flexiblen Schlauchs ein reibungsmindernder Überzug aufgebracht ist. Die Umfangsrillung erhöht die Flexibilität in Längsrichtung und beim Biegen der Ummantelung.

Der Schlauch besteht zweckmäßigerweise aus geschäumtem Polyethylen, Polystyrol, Polypropylen, thermoplastischen Elastomeren oder Kombinationen daraus.

Die Endabschnitte des flexiblen Schlauches werden vorzugsweise unter Einwirkung von Wärme und/oder mechanisch zusammengedrückt. Bei der Verformung durch Wärme besteht dann die dünne Schicht aus dem geschäumten Kunststoff der Ummantelung, der an den Endabschnitten des Führungsrohrs auf die Außenform zusammengedrückt ist, wobei die Schaumstruktur im Wesentlichen verlorengegangen ist.

Die den beiden Endabschnitten des Führungsrohrs zugeordneten Anschläge sind vorteilhafterweise aufsetzbare Endkappen.

Die Ummantelung für die Rohranordnung kann dadurch hergestellt werden, dass die den Endabschnitten des Führungsrohrs zugeordnete dünne Schicht aus Kunststoff direkt auf dem Führungsrohr hergestellt wird.

Die Ummantelung lässt sich jedoch auch mit Hilfe einer Vorrichtung herstellen, die eine beheizbare und kühlbare Form und einen in der Längsrichtung der Form verschiebbaren Dorn aufweist. Die Form hat einen Formhohlraum, der sich ausgehend von wenigstens einer Minimalabmessung, die der Außenform des flexiblen Schlauchs entspricht, trichterförmig zu einem zylindrischen Abschnitt verjüngt, dessen Innenabmessung der vorgegebenen Außenund Montageform der dünnen Schicht entspricht. Der Dorn hat ein in den flexiblen Schlauch einführbares Kalibrierstück mit einem dem Außendurchmesser des Führungsrohres entsprechenden Außendurchmesser und mit einer für die Kalibrierung des Innendurchmessers der dünnen Schicht ausreichenden Länge. Das Kalibrierstück geht in ein Betätigungsstück mit gegenüber dem Kalibrierstück verringertem Querschnitt über. Wenn der in den Formhohlraum eingeschobene flexible Schlauch in seinem Endbereich durch die von der beheizten Form zugeführte Wärme erweicht, folgt das Material der trichterförmigen Verjüngung und fließt in die Außenform der dünnen Schicht unter weitgehender Aufhebung der Schaumstruktur. Durch Einschieben des Dorns in den Innenraum der dünnen Schicht und anschließende Kühlung werden der Innendurchmesser und die Außenform der dünnen Schicht stabil ausgeformt und kalibriert.

Anhand von Zeichnungen werden Ausführungsbeispiele der Erfindung näher erläutert. Es zeigt:
- Fig. 1: schematisch im Axialschnitt eine Rohranordnung nach der Erfindung,
- Fig. 2: die Rohranordnung von Fig. 1 perspektivisch,
- Fig. 3: in einer Ansicht wie Fig. 1 eine modifizierte Rohranordnung und
- Fig. 4: die Rohranordnung von Fig. 3 perspektivisch.
- Fig. 5: schematisch im Schnitt eine Ausführungsform einer Vorrichtung zur Herstellung der Ummantelung.

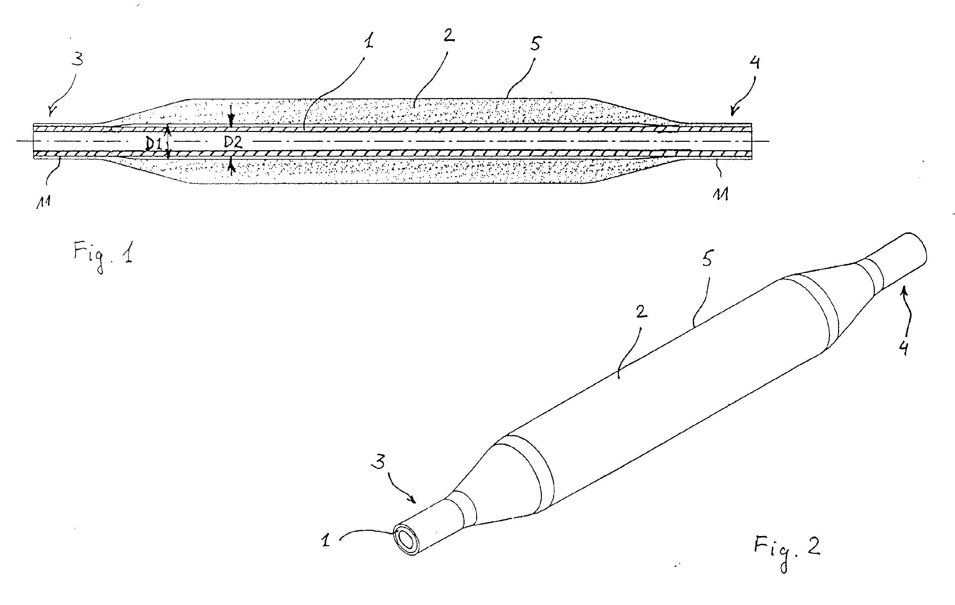

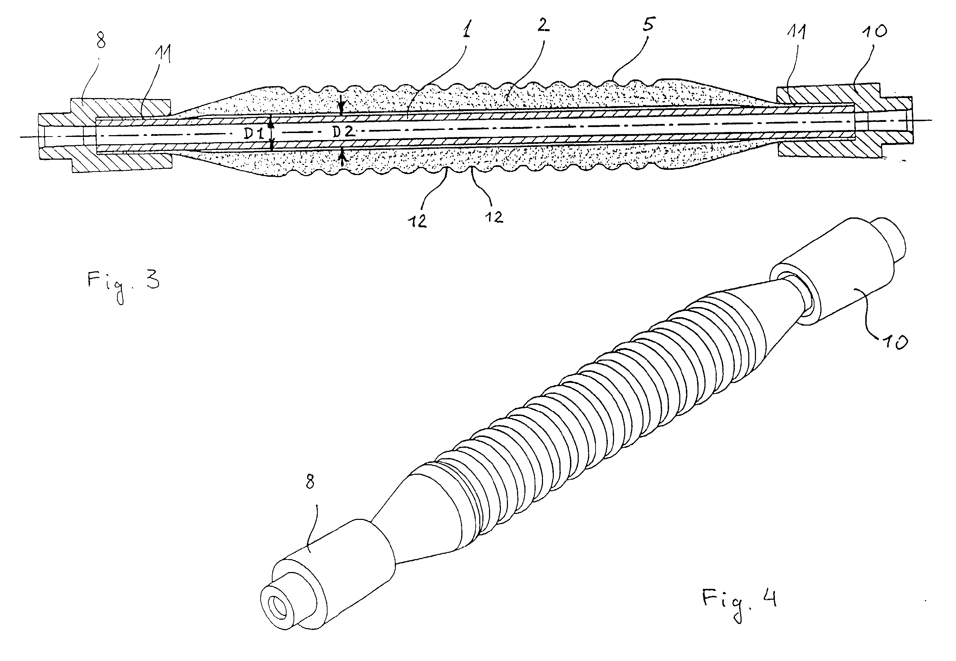

Das in Fig. 1 und 2 gezeigte Führungsrohr 1 besteht aus gewendeltem Federstahl, der außen keine Schutzschicht aufweist, und führt ein nicht gezeigtes Zugseil nach Art eines Bowdenzugs. Das Führungsrohr 1 hat zwei Endabschnitte 3 und 4 und ist von einem flexiblen Schlauch 2 aus einem geschäumten Kunststoff lose umschlossen. Der Schlauch 2 besteht aus einer Mischung aus Polyethylen und Polypropylen, hat eine dem Führungsrohr 1 entsprechende Länge und weist auf der Außenfläche einen hautförmigen reibungsmindernden Überzug 5 aus einer Mischung aus Polyethylen und Polytetrafluorethylen auf. An den Endabschnitten 3 und 4 des Führungsrohrs 1 ist der geschäumte Kunststoff des Schlauchs 2 zu einer dünnen Schicht 11 zusammengedrückt, die die Endabschnitte 3 und 4 abdichtend und passgenau umschließt.

Gemäß Fig. 3 und 4 hat die Außenfläche des mit dem Überzug 5 versehenen Schlauchs 2 eine Profilierung in Form von im Abstand angeordneten Umfangsrillen 12, wodurch im Längsschnitt ein Wellenprofil entsteht, welches eine gute Energieabsorption und Flexibilität begründet sowie einen Klapper- und Quietschschutz bildet.

Wie in Fig. 3 gezeigt ist, sind auf die dünnen zusammengedrückten Schaumstoffschichten an den beiden Endabschnitten 3 und 4 des Führungsrohrs 1 Endkappen 8 und 10 aufgesetzt, die als Anschläge zur Fixierung des Führungsrohrs 1 dienen. Die Endkappen 8 und 10 bestehen bei der gezeigten Ausführungsform aus einem harten Kunststoff.

Der flexible Schlauch 2 wird als Stück von einem Schlauchstrang abgeschnitten und auf das Führungsrohr 1 aufgeschoben. Dann wird der Schlauch 2 im Bereich der Endabschnitte 3 und 4 des Führungsrohrs 1 entweder bei Raumtemperatur und Druckeinwirkung oder unter Einwirkung von Wärme und gegebenenfalls Druck zu einer dünnen Schicht 11 um die Endabschnitte 3 und 4 zusammengedrückt, so dass er diese abdichtend wie eine Schutzschicht umschließt.

Da der Innendurchmesser D1 des flexiblen Schlauchs 2 größer ist als der Außendurchmesser D2 des Führungsrohrs 1, lässt sich der flexible Schlauch 2 problemlos auf das Führungsrohr 1 aufschieben und hat aufgrund der radialen Verformungsmöglichkeit gute Dämpfungseigenschaften bei seitlichen Stößen.

Wenn der Schlauch 2 mit einer Glasfläche in Kontakt steht und eine Relativbewegung zwischen der Glasfläche und dem Schlauch 2 bei Betätigung eines Fensterhebers in einem Kraftfahrzeug zustande kommt, ergeben sich in der Regel keine Quietschgeräusche.

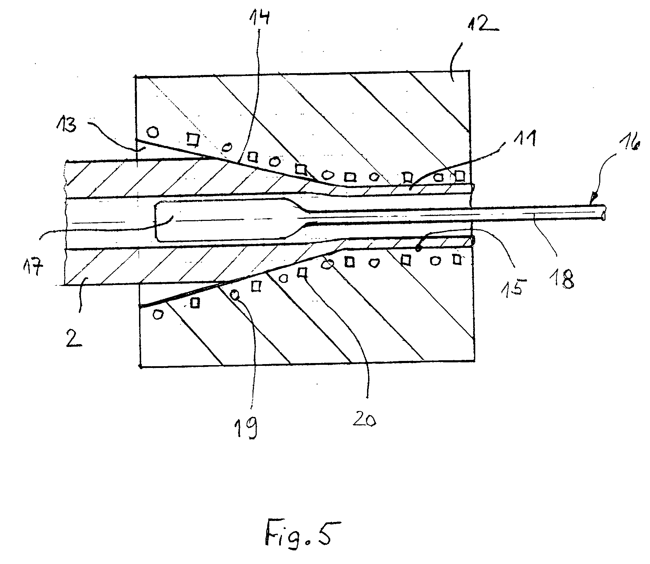

Die dünne Schicht 11 aus dem Kunststoff kann entweder direkt auf dem Führungsrohr 1 oder mit Hilfe einer in Fig. 5 gezeigten Vorrichtung ausgebildet werden.

Die Vorrichtung besteht aus einer Form 12 mit einer Heizung 19 und einer Kühlung 20. Die Form 12 hat einen Formhohlraum 13, der sich durch die Form 12 hindurch erstreckt und einen sich trichterförmig verjüngenden Abschnitt 14 ausgehend von ihrem einen Ende hat, der in einen zylindrischen Abschnitt 15 übergeht, der sich bis zum anderen Ende der Form 12 erstreckt und einen Innendurchmesser hat, der dem vorgegebenen Außendurchmesser der auszubildenden dünnen Schicht 11 entspricht. Dem Formhohlraum 13 ist ein Dorn 16 zugeordnet, der sich aus einem Kalibrierstück 17 und einem Betätigungsstück 18 zusammensetzt. Das Kalibrierstück 17 hat einen Außendurchmesser, der dem Außendurchmesser des Führungsrohrs 1 entspricht, und eine Länge, die für eine ausreichende Kalibrierung der dünnen Schicht 11 bemessen ist, wenn der Dorn 16 mit dem Betätigungsstück 18 relativ zur Form 12 verschoben wird. Das Betätigungsstück 18 hat einen Querschnitt, der wesentlich kleiner ist als der des Kalibrierstücks 17.

Wenn die Form 12 von Fig. 5 durch die Heizung 19 beheizt wird, wird der Schlauch 2 mit seinem einen Ende in den trichterförmigen Abschnitt 14 eingeführt. Das Ende des Schlauchs 2, das mit der Innenwand des trichterförmigen Abschnitts 14 in Kontakt kommt, wird erhitzt und dadurch erweicht und bewegt sich in Richtung des zylindrischen Abschnitts 15, wobei die Schaumstruktur weitgehend aufgehoben und das Material der dünnen Schicht 11 gebildet wird. Anschließend wird der Dorn 16 mit seinem Kalibrierstück 17 voraus in den zylindrischen Abschnitt 15 hinein und durch ihn hindurch geschoben. Dann wird nach Abschalten der Heizung 19 die Form 12 durch Aktivierung der Kühlung 20 gekühlt und schließlich der Dorn 16 mit seinem Kalibrierstück 17 durch die außen sowie innen formgenau ausgebildete und stabil gewordene dünne Schicht 11 herausgezogen. Da der Innendurchmesser der dünnen Schicht 11 dem Außendurchmesser des Kalibrierstücks 17 entspricht, sitzt die dünne Schicht 11, wenn sie im erstarrten Zustand auf das Führungsrohr 1 aufgebracht ist, passgenau und fixiert auf diesem.

## Patentansprüche

1. Rohranordnung für die Führungsaufnahme eines Zugseils
- mit einem Führungsrohr (1), insbesondere aus gewendeltem Federstahl oder Kunststoff, das in zwei Endabschnitten (3, 4) ausläuft, denen jeweils ein Anschlag zugeordnet ist, und
- mit einer dem Führungsrohr (1) außenseitig zugeordneten Ummantelung aus Kunststoff,
**dadurch gekennzeichnet,**
- **dass** die Ummantelung ein flexibler Schlauch (2) aus einem geschäumten Kunststoff ist, der auf das Führungsrohr (1) aufgeschoben ist, und
- **dass** der geschäumte Kunststoff wenigstens an den Endabschnitten (3, 4) des Führungsrohrs (1) als dünne Schicht ausgebildet und an den Endabschnitten (3,4) abdichtend fixiert ist,
- wobei die Außenform der dünnen Schicht (11) der Montageform entspricht und kleiner ist als der Außenumfang der Ummantelung.

2. Rohranordnung nach Anspruch 1, **dadurch gekennzeichnet, dass** der Innendurchmesser (D1) des flexiblen Schlauches bis zum 1,5-fachen des Außendurchmessers (D2) des Führungsrohrs (1) beträgt.

3. Rohranordnung nach Anspruch 1 oder 2, **dadurch gekennzeichnet, dass** die Außenfläche des Schlauchs (2) aufgerauht ist.

4. Rohranordnung nach Anspruch 1 bis 3, **dadurch gekennzeichnet, dass** die Außenfläche des flexiblen Schlauches (2) eine Profilierung aufweist.

5. Rohranordnung nach Anspruch 4, **dadurch gekennzeichnet, dass** die Profilierung von beabstandeten Umfangsrillen (12) gebildet wird.

6. Rohranordnung nach einem der vorhergehenden Ansprüche, **dadurch gekennzeichnet, dass** die Außenfläche des flexiblen Schlauches (2) einen reibungsmindernden Überzug (5) aufweist.

7. Rohranordnung nach einem der vorhergehenden Ansprüche, **dadurch gekennzeichnet, dass** der flexible Schlauch (2) aus geschäumtem Polyethylen, Polystyrol, Polypropylen, thermoplastischem Elastomer oder aus Kombinationen davon besteht.

8. Rohranordnung nach einem der vorhergehenden Ansprüche, **dadurch gekennzeichnet, dass** die dünne Schicht (11) aus dem geschäumten Kunststoff der Ummantelung besteht, der an den Endabschnitten (3, 4) des Führungsrohrs (1) auf die Montageform durch weitgehendes Aufheben der Schaumstruktur des Kunststoffs verkleinert ist.

9. Rohranordnung nach Anspruch 8, **dadurch gekennzeichnet, dass** der flexible Schlauch (2) an den Endabschnitten (3, 4) des Führungsrohrs (1) unter Einwirkung von Wärme und/oder mechanisch zusammengedrückt ist.

10. Rohranordnung nach einem der vorhergehenden Ansprüche, **dadurch gekennzeichnet, dass** die Anschläge auf den zusammengedrückten flexiblen Schlauch (2) an den Endabschnitten (3, 4) des Führungsrohrs (1) aufsetzbare Endkappen (8, 10) sind.

11. Verfahren zur Herstellung der Ummantelung für die Rohranordnung nach einem der vorhergehenden Ansprüche, **dadurch gekennzeichnet, dass** die den Endabschnitten (3, 4) des Führungsrohrs (1) zugeordnete dünne Schicht (11) aus Kunststoff direkt auf dem Führungsrohr (1) hergestellt wird.

12. Vorrichtung zur Herstellung der Ummantelung für die Rohranordnung nach Anspruch 8 oder 9, **gekennzeichnet**
- **durch** eine Form (12) mit einer steuerbar ein- und abschaltbaren Heizung (19) und Kühlung (20) und mit einem Formhohlraum (13), der ausgehend von einem Ende der Form (12) einen sich trichterförmig verjüngenden Abschnitt (14) aufweist, der in einen zylindrischen Abschnitt (15) übergeht, der sich zum anderen Ende der Form (12) erstreckt, wobei die große Abmessung des trichterförmigen Abschnitts (14) wenigstens der Außenabmessung des flexiblen Schlauchs (2) entspricht und der zylindrische Abschnitt (15) einen Innendurchmesser hat, der dem vorgegebenen Außendurchmesser der dünnen Schicht (11) entspricht, und
- **durch** einen relativ zum Formhohlraum (13) in dessen Längsrichtung verschiebbaren Dorn (16); der ein in den flexiblen Schlauch (2) einführbares Kalibrierstück (17) mit einem dem Außendurchmesser des Führungsrohrs (1) entsprechenden Außendurchmesser und einer für die Kalibrierung des Innendurchmessers der dünnen Schicht (11) ausreichenden Länge aufweist und in ein Betätigungsstück (18) mit verringertem Querschnitt übergeht,
- wobei der in den trichterförmigen Abschnitt (14) des Formhohlraums (13) eingeschobene flexible Schlauch (2) im Kontaktbereich mit dem trichterförmigen Abschnitt (14) bei eingeschalteter Heizung (19) durch Wärmezufuhr erweicht und seinen Querschnitt auf die Außenform der dünnen Schicht (11) durch weitgehende Aufhebung der Schaumstruktur des geschäumten Kunststoffs reduziert, und
- wobei durch Verschieben des Dorns (16) relativ zum zylindrischen Abschnitt (15) des Formhohlraums (13) bei abgeschalteter Heizung (19) und eingeschalteter Kühlung (20) der Innenraum der dünnen Schicht (11) durch das Kalibrierstück (17) auf den Außendurchmesser des Führungsrohrs (1) kalibriert und die Außenform der dünnen Schicht (11) im zylindrischen Abschnitt (15) stabilisiert wird.
